# EUROPÄISCHE PATENTSCHRIFT

(11) **EP 1 039 618 B1**
(45) Veröffentlichungstag und Bekanntmachung des Hinweises auf die Patenterteilung: **14.08.2002**
(21) Anmeldenummer: 00103884.3
(22) Anmeldetag: 24.02.2000
(51) Int. Cl.: H02K 17/16

(54) **Kurzschlusskäfig für eine elektrische Maschine, vorzugsweise Ansynchronmaschine**
Short-circuit cage for an electrical machine, preferably asynchronous machine
Cage de court-circuit pour une machine électrique, de préférence machine asynchrone

(30) Priorität: 15.03.1999 DE 19911401; 30.04.1999 DE 19919899
(43) Veröffentlichungstag der Anmeldung: 27.09.2000
(73) Patentinhaber: Loher Aktiengesellschaft, D-94099 Ruhstorf (DE)
(72) Erfinder: Zwack, Josef, Dipl.-Ing., 94060 Pocking (DE)
(74) Vertreter: Zinnecker, Armin, Dipl.-Ing.

(56) Entgegenhaltungen:
- DE-C- 19 729 432
- US-A- 2 786 953
- US-A- 3 612 925

## Beschreibung

Die Erfindung betrifft einen Kurzschlußkäfig für eine elektrische Maschine, vorzugsweise für eine Asynchronmaschine. Die Erfindung betrifft femer einen Kurzschlußläufer für eine elektrische Maschine, vorzugsweise für eine Asynchronmaschine. Die Erfindung betrifft schließlich eine elektrische Maschine, vorzugsweise eine Asynchronmaschine, insbesondere eine Drehstromasynchronmaschine.

Bei der elektrischen Maschine oder Asynchronmaschine kann es sich um einen Motor oder um einen Generator handeln.

Drehstromasynchronmaschinen (Motoren oder Generatoren) sind seit langem bekannt. Während bei einer Drehstromasynchronmaschine mit sogenanntem Schleifringläufer der auf einer Welle befindliche geblechte Läufer mit einer Wicklung versehen ist, werden beim sogenannten Kurzschlußläufer die Läuferstäbe an beiden Enden mit einem oder mehreren Kurzschlußringen verbunden. Der Kurzschlußläufer weist im allgemeinen eine Welle, einen Kurzschlußkäfig und ein Blechpaket auf. Der Kurzschlußkäfig weist im allgemeinen Kurzschlußstäbe (Läuferstäbe) und Kurzschlußringe auf.

Bei Maschinen kleiner und mittlerer Leistung wird der Kurzschlußkäfig (also Kurzschlußstäbe bzw. Läuferstäbe und Kurzschlußringe) üblicherweise mittels Druckgießen aus Aluminium hergestellt. Bei Maschinen hoher Leistung werden in der Regel Kurzschlußstäbe aus Kupfer verwendet, die durch Hartlöten mit den Kurzschlußringen, die ebenfalls meist aus Kupfer sind, verbunden werden. Bei Maschinen kleiner und mittlerer Leistung werden nur in wenigen Ausnahmefällen Kurzschlußstäbe und Kurzschlußringe nicht aus Aluminium produziert. Die hauptsächlichen Gründe dafür sind mechanische Gründe (Festigkeit, Korrosion, Wärmespeicherkapazität) und elektrische Gründe (spezielle Anforderungen an den Wirkungsgrad, Leistungsfaktor, Momentencharakteristik, höhere zulässige Rotorblockierzeit).

Ein Kurzschiußkäfig nach dem Oberbegriff des Anspruchs 1 ist aus der DE 197 29 432 C1 bekannt.

Aus der JP 10 032 966 A ist ein Rotor für einen Induktionsmotor bekannt, der aus zwei Halbteilen besteht, wobei das eine Halbteil aus einem Ring mit Stäben und das andere Halbteil aus einem Ring mit einer entsprechenden Anzahl von Aussparungen besteht.

Aufgabe der Erfindung ist es, einen in seiner Herstellung kostengünstigen Kurzschlußkäfig für elektrische Maschinen, insbesondere für Asynchronmaschinen, kleiner und mittlerer Leistung zu schaffen.

Erfindungsgemäß wird diese Aufgabe durch die kennzeichnenden Merkmale des Anspruchs 1 gelöst. Der Kurzschlußkäfig besteht, aus zwei Halbteilen, die miteinander verbunden sind, wobei die Halbteile jeweils aus der halben Gesamt-Anzahl von Kurzschlußstäben und einem Kurzschlußring mit entsprechender Anzahl an Aussparungen für das Gegenstück bestehen. Die bei einem Halbteil vorhandene Anzahl von Kurzschlußstäben muß nicht exakt die halbe Gesamt-Anzahl der Kurzschlußstäbe sein; es kann auch eine von der Hälfte-Hälfte-Aufteilung abweichende Aufteilung der Gesamt-Anzahl von Kurzschlußstäben auf die beiden Halbteile vorgenommen werden. Es ist allerdings vorteilhaft, wenn jedes Halbteil jeweils die halbe Gesamt-Anzahl von Kurzschlußstäben aufweist. Vorzugsweise sind die Halbteile formschlüssig miteinander verbunden. Die Verbindung geschieht vorzugsweise nach Aufnahme der Läuferbleche. Der erfindungsgemäße Kurzschlußkäfig kann ohne das bisher übliche arbeitsintensive Einschlagen der einzelnen Kurzschlußstäbe mit anschließendem Hartlöten der Kurzschlußstab-Kurzschlußring-Verbindungen realisiert werden.

Ein Kurzschlußläufer gemäß der Erfindung weist einen erfindungsgemäßen Kurzschlußkäfig auf. Die erfindungsgemäße elektrische Maschine, insbesondere Asynchronmaschine, ist durch einen erfindungsgemäßen Kurzschlußkäfig bzw. einen erfindungsgemäßen Kurzschlußläufer gekennzeichnet.

Vorteilhafte Weiterbildungen der Erfindung sind in den Unteransprüchen beschrieben.

Der Kurzschlußkäfig bzw. dessen Halbteile bestehen vorzugsweise aus Metall. Besonders geeignet ist Kupfer bzw. Kupferguß.

Durch die Erfindung ergeben sich folgende Vorteile: Der erfindungsgemäße Kurzschlußkäfig (Läuferkäfig) kann kostengünstig aus Metall, vorzugsweise Kupferguß, hergestellt werden, da das Einschlagen der einzelen Kurzschlußstäbe und das Hartlöten entfällt; hierdurch ist eine Automatisierung der Fertigung möglich. Der Wirkungsgrad der elektrischen Maschine kann bis zu mehreren Prozent erhöht werden, da die Verluste im Kurzschlußläufer drastisch reduziert werden können; der elektrische Leitwert von Kupfer ist nämlich wesentlich höher als der elektrische Leitwert von Aluminium. Hierdurch wiederum wird eine Energieeinsparung durch verminderte Verluste und weniger Energieaufnahme möglich, was volkswirtschaftliche Vorteile, eine Entlastung der Umwelt und weitere Vorteile mit sich bringt. Ein weiterer Vorteil liegt in der Steigerung der Motorleistung in Folge der niedrigeren Verluste und der damit verbundenen geringeren Motorerwärmung. Es kann ferner eine höhere zulässige maximale Anlaufzeit erreicht werden, da der Läuferkäfig eine höhere Wärmekapazität aufweist und da eine höhere Grenztemperatur des Läufers zulässig ist. Der Kurzschlußläufer weist eine höhere mechanische Festigkeit auf (Kupfer hat eine höhere mechanische Festigkeit als Aluminium) und eine höhere Temperaturbeständigkeit (auch die Temperaturbeständigkeit von Kupfer ist höher als die Temperaturbeständigkeit von Aluminium). Der Kurzschlußkäfig gemäß der Erfindung kann in Bereichen eingesetzt werden, in denen Aluminium nicht erwünscht oder geeignet ist, z.B. in salzhaltiger Atmosphäre. Bei explosionsgeschützten Motoren der Zündschutzart EEx e kann eine ausreichende sogenannte t_{E}-Zeit erzielt werden (also eine höhere zulässige Rotorblockierzeit). Mit Kupfergußstäben ist eine beliebige Stabform möglich, da auf Normabmessungen keine Rücksicht genommen werden muß. Damit wird eine Optimierung bezüglich der elektrischen Auslegung und der Momentencharakteristik möglich. Femer ist eine Lagerhaltung von Rotoren mit Kupferkäfig ohne Welle möglich. Dies ist nach den bisher bekannten Lösungen aufgrund der mangelnden Fixierung nicht möglich; deshalb sind bisher keine wirtschaftlich vernünftigen Losgrößen erreichbar, was bisher zu höheren Herstellungskosten (infolge relativ höherer Rüstzeiten) führt. Schließlich kann der Kurzschlußring die Funktion einer sogenannten Läuferdruckscheibe übernehmen, die sonst in der Regel bei hartgelöteten Kupferkäfigen notwendig ist, um das Blechpaket zu fixieren.

Ausführungsbeispiele der Erfindung werden nachstehend anhand der beigefügten Zeichnung im einzelnen erläutert. In der Zeichnung zeigt
- Fig. 1: zwei Halbteile vor dem Zusammenfügen in einer perspektivischen Darstellung,
- Fig. 1a: eine gegenüber Fig. 1 abgewandelte Ausführungsform,
- Fig. 2: einen Teil eines Halbteiles in einer perspektivischen Darstellung,
- Fig. 3: eine Aufnahmeöffnung in einem Kurzschlußring,
- Fig. 4: eine vorteilhafte Ringgeometrie in einer Schnittdarstellung,
- Fig. 5: eine weitere abgewandelte Ausführungsform in einer perspektivischen Darstellung und
- Fig. 6: eine weitere abgewandelte Ausführungsform von zwei Halbteilen in einer perspektivischen Darstellung.

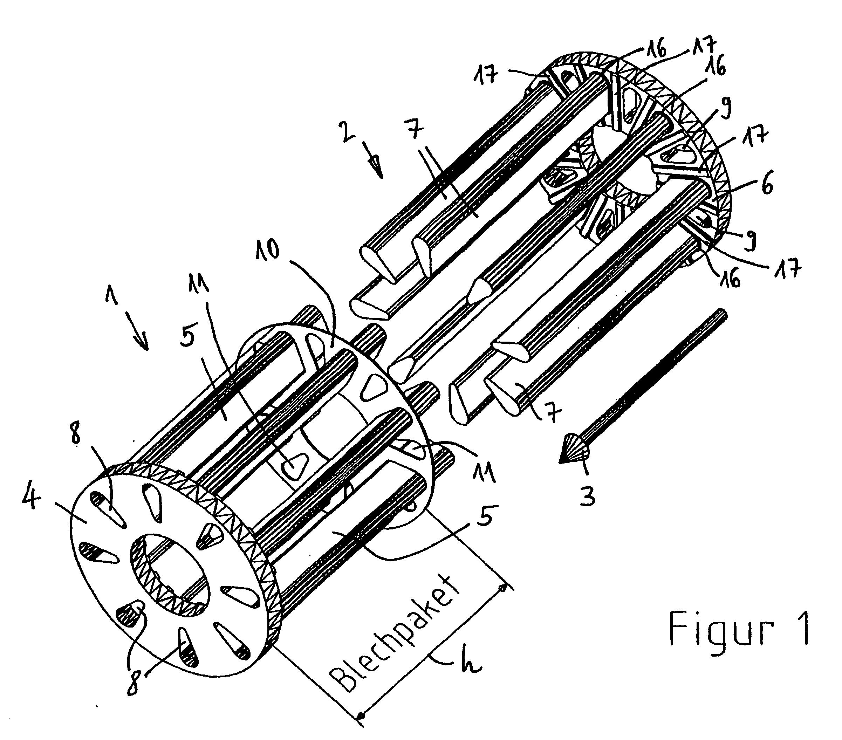

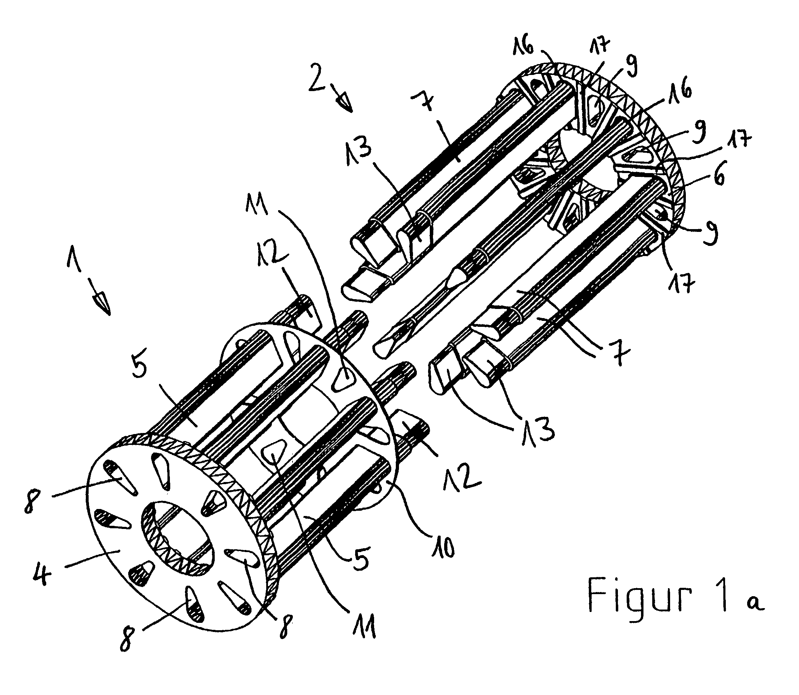

In Fig. 1 sind zwei Halbteile 1, 2 eines Kurzschlußkäfigs vor dem Zusammenfügen perspektivisch dargestellt. Das Halbteil 2 wird in Richtung des Pfeils 3 bewegt und auf diese Weise mit dem Halbteil 1 formschlüssig verbunden. Das Halbteil 1 besteht aus einem Kurzschlußring 4 und damit einstückig verbundenen Kurzschlußstäben 5. In gleicher Weise besteht das Halbteil 2 aus einem Kurzschlußring 6 und mit diesem einstückigen Kurzschlußstäben 7. Wie aus Fig. 1 ersichtlich weist jeder Kurzschlußring 4, 6 zwischen zwei aufeinanderfolgenden Kurzschlußstäben 5 bzw. 7 jeweils eine Aussparung 8, 9 auf, die zur Aufnahme des Endes eines Kurzschlußstabes des jeweiligen anderen Halbteils dienen. Jedes Halbteil 1, 2 besteht dementsprechend aus der halben Gesamtzahl von Kurzschlußstäben und einem Kurzschlußring mit einer entsprechenden Anzahl an Aussparungen für das Gegenstück.

Das aus Dynamoblechen bestehende Blechpaket ist im Ausführungsbeispiel der Fig. 1 mit dem Halbteil 1 verbunden. Aus Gründen der vereinfachten zeichnerischen Darstellung ist lediglich ein einziges Dynamoblech 10 gezeigt. Tatsächlich ist über die gesamte Höhe h von dem Kurzschlußring 4 bis zu dem zeichnerisch dargestellten Dynamoblech 10 eine Vielzahl von weiteren Dynamoblechen vorhanden, die das Blechpaket bilden. Die Dynamobleche dienen in an sich bekannter Weise zur Führung des magnetischen Flusses. Wie aus Fig. 1 ersichtlich sind beide Halbteile 1, 2 des Kurzschlußkäfigs völlig identisch. Sie werden mit derselben Form hergestellt, so daß die Formkosten erheblich verringert werden können. Die Kurzschlußstäbe 5 bzw. 7 sind bereits in der Form integriert und am jeweiligen Kurzschlußring 4, 6 angegossen. Die Aussparungen 8 bzw. 9 haben die Form der Kurzschlußstäbe 5 bzw. 7, jedoch etwas geringer, so daß sich eine Preßpassung ergibt.

Bei der Herstellung des Kurzschlußkäfigs wird das in Fig. 1 rechts gezeigte Halbteil 2 ohne Bleche in die ausgestanzten Nuten (Aussparungen) 11 des Blechpakets 10 eingeführt. Die beiden Halbteile 1 und 2 werden bis auf Anschlag zusammengedrückt. Es entsteht ein sogenannter Kurzschlußläufer mit Kurzschlußkäfig, jedoch noch ohne Welle. Die Welle kann anschließend eingepreßt werden.

Der Kurzschlußläufer kann allerdings auch auf andere Weise hergestellt werden. Es ist beispielsweise möglich, daß das Blechpaket bereits geschichtet auf einer Paßfeder auf der Welle sitzt. Die Halbteile können dann maschinell von links und rechts gleichzeitig eingepreßt werden. Nach einer anderen Herstellungsvariante wird zunächst je die Hälfte der Dynamobleche auf jedes der Halbteile 1 und 2 aufgeschoben. Die beiden Halbteile 1 und 2 werden dann in einem Arbeitsvorgang bzw. Preßvorgang zusammengeschoben. Nach dem Aufpressen auf die Welle kann dann der Luftspalt auf Maß überdreht werden.

Bei der abgewandelten Ausführungsform gemäß Fig. 1 a sind gleiche Teile mit gleichen Bezugszeichen versehen, so daß sie nicht erneut beschrieben werden müssen. Im Unterschied zur Ausführungsform gemäß Fig. 1 sind bei der Fig. 1 a die Kurzschlußstäbe 5 bzw. 7 im Bereich ihrer Enden verjüngt, also mit Verjüngungen 12, 13 versehen.

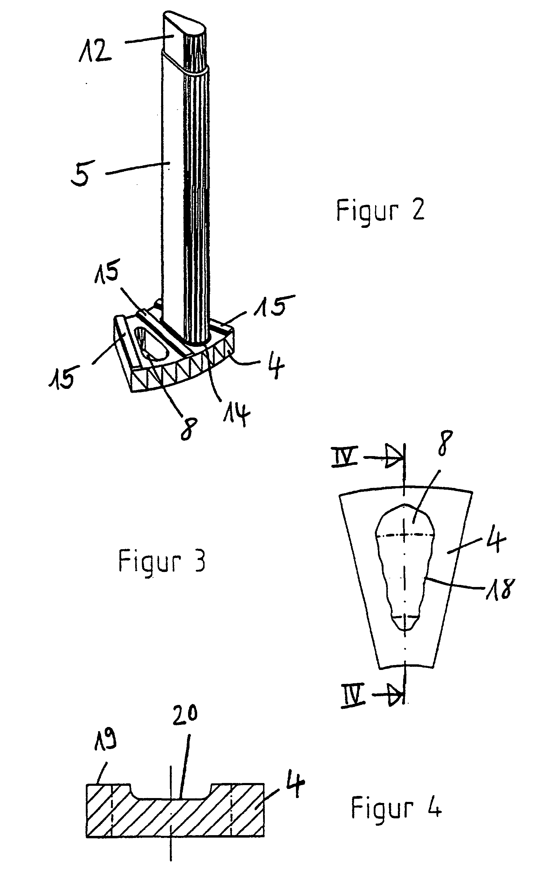

Fig. 2 zeigt ein Segment eines Halbteils mit einem Kurzschlußstab 5 (bzw. 7) und einer Aufnahmeöffnung 8 (bzw. 9) für den zugehörigen Kurzschlußstab aus der anderen Richtung. Aus gießtechnischen Gründen und aus Gründen der Festigkeit ist am Übergang vom Kurzschlußstab 5 zum Kurzschlußring 4 ein kleiner Radius 14 angebracht. Die Kurzschlußringe weisen also im Bereich der Kurzschlußstäbe (d.h. an den Übergängen der Kurzschlußstäbe in die Kurzschlußringe) einen Radius 14 auf.

Durch einen derartigen Radius 14 können allerdings beim Beschicken mit den Dynamoblechen 10 Probleme für die äußeren Bleche entstehen. Daher sind an der Innenseite des Kurzschlußringes 4 Erhebungen 15 vorgesehen, die in radialer Richtung verlaufen und einen im wesentlichen rechteckigen Querschnitt aufweisen. An diesen Erhebungen 15, die jeweils zwischen dem Stab-Ring-Übergang und der nächstgelegenen Aussparung am Kurzschlußring - an der Innenseite des Kurzschlußringes - angegossen sind, liegt das äußerste Dynamoblech sauber an, so daß die Fixierung der Dynamobleche gewährleistet ist. An dem Halbteil 2 sind entsprechende Radien 16 und entsprechende Erhebungen 17 vorhanden.

Die Kurzschlußstäbe 5, 7 sind im Bereich ihrer Enden etwas verjüngt, weisen dort also Verjüngungen 12, 13 auf. Dadurch wird gewährleistet, daß beim Aufschichten und eventuellen Aufpressen der Dynamobleche diese in diesem Bereich keine maßlichen Änderungen durch einen eventuellen Materialabtrag hervorrufen. Die Passung Stabende-Aussparung am Ring wird somit nicht beeinträchtigt. Selbstverständlich wird das Paßmaß für die spätere Preßpassung hinsichtlich der Geometrie für die Aussparung am Kurzschlußring auf das Maß des Stabendes abgestimmt.

Die Enden der Kurzschlußstäbe 5, 7 sind femer leicht konisch, damit das Einfädeln in die Aussparung jederzeit gewährleistet ist. In entsprechender Weise können die Aussparungen 8, 9 an den Kurzschlußringen 4, 6 an der Ring-Innenseite jeweils leicht konisch ausgestaltet sein. Sie können stattdessen oder zusätzlich mit einem Radius und/oder mit einer Fase zur gezielten Aufnahme der Enden der Kurzschlußstäbe ausgebildet sein.

Fig. 3 zeigt ein Segment des Kurzschlußrings 4 (der Kurzschlußring 6 ist entsprechend ausgebildet) mit einer Aussparung 8 für die Aufnahme eines Stabendes. Die Innenkontur 18 der Aussparung 8 ist dabei mit kleinen Rundungen versehen. Dies hat zur Folge, daß die Toleranz der späteren Preßpassung den gießtechnischen Möglichkeiten optimaler angepaßt werden kann und daß nach dem Einpreßvorgang jederzeit eine definierte Haftung bestehen bleibt.

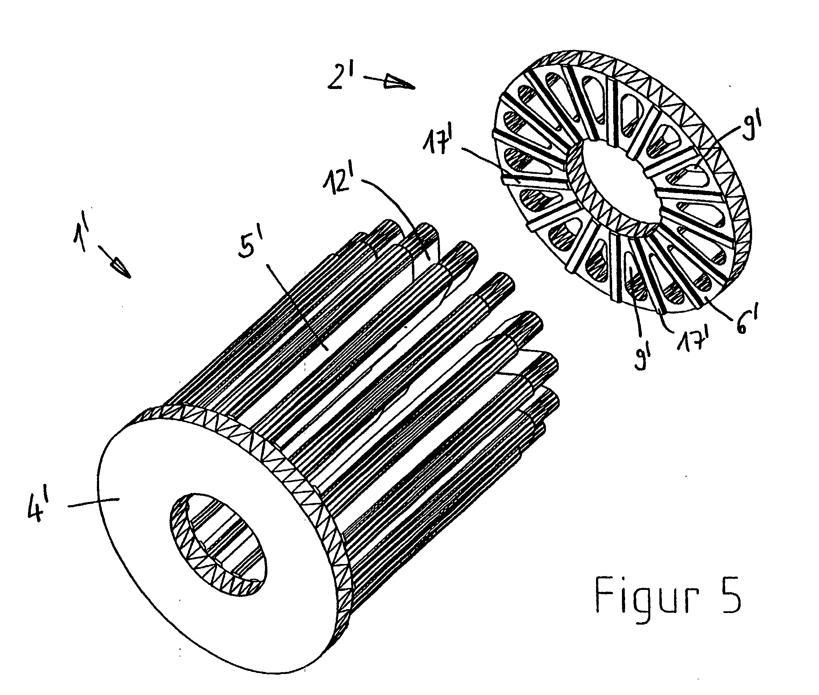

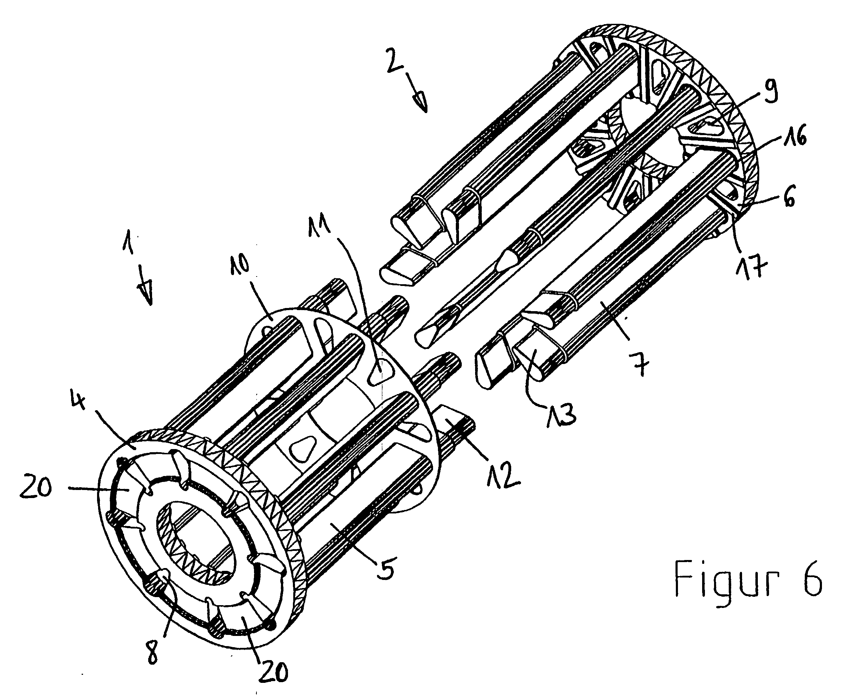

Fig. 4 zeigt einen Querschnitt längs der Linie IV-IV in Fig. 3. In Fig. 4 ist eine vorteilhafte Form der Ringgeometrie (Geometrie der Kurzschlußringe 4, 6) für den Fall gezeigt, daß aus speziellen Gründen doch eine Lötverbindung der beiden Halbteile an den Verbindungsstellen von Kurzschlußstäben und Kurzschlußringen vorgenommen wird. Dies kann unter Umständen aus Gründen einer erhöhten Lebensdauer, extremes Einsätzbedingungen und Betriebsbedingungen (hohe Schalthäufigkeit, Momentenstöße, Betrieb im Heißraum etc.) sowie aus Gründen der Betriebsphilosophie erfolgen. An der Ringaußenseite 19 wird dabei gießtechnisch eine Vertiefung 20 vorgesehen, die zur Aufnahme des Lots, z.B. beim an sich bekannten Verfahren des Induktivlötens, dient. Das Löten der Kurzschlußstab-Kurzschlußring-Verbindung erfolgt dabei im stehenden Zustand des Läuferkörpers. Durch die halbe Anzahl an Lötstellen gegenüber dem herkömmlichen Verfahren ergibt sich der Vorteil eines in etwa halbierten Lotbedarfs. Die Vertiefung 20 bzw. umlaufende Vertiefung ist auch in Fig. 6 gezeigt.

Fig. 5 zeigt eine abgewandelte Ausführungsform, bei der das erste Halbteil 1' sämtliche Kurzschlußstäbe 5' aufweist und bei der das zweite Halbteil 2' lediglich aus einem Kurzschlußring 6' besteht, der die Gesamtzahl (also gegenüber den Ausführungsformen gemäß Figuren 1 und 1 a die doppelte Anzahl) von Aussparungen 9' aufweist. Bei der Ausführungsform nach Fig. 5 besteht also das Halbteil 1' aus einem Kurzschlußring 4' mit der gesamten Anzahl von Kurzschlußstäben 5' und ohne Aussparungen, während das andere Halbteil 2' aus einem Kurzschlußring 6' mit einer entsprechenden Anzahl an Aussparungen 9' und ohne Kurzschlußstäbe besteht. Die Kurzschlußstäbe 5' weisen an ihren Enden Verjüngungen 12' auf. Zwischen den Aussparungen 9' sind Erhebungen 17' vorgesehen. Ferner weist der Kurzschlußring 4' im Bereich der Kurzschlußstäbe Radien auf (in der Fig. 5 nicht zu sehen, da verdeckt).

Bei der in Fig. 5 gezeigten Variante ist die volle Anzahl von Kurzschlußstäben 5' an einem Kurzschlußring 4' angegossen. Auch der zur Komplettierung des Kurzschlußkäfigs dienende Kurzschlußring 6' ist aus Guß hergestellt, vorzugsweise aus Kupferguß. Die Verbindung des separaten Kurzschlußrings 6' mit den gesamten Stäben 5' kann wie bereits beschrieben erfolgen. Bei der Ausführungsform nach Fig. 5 ergibt sich die weitere Möglichkeit, daß der Kurzschlußring 6' vor dem Zusammenfügen erhitzt werden kann und nach dem Aufbringen auf die Kurzschlußstäbe 5' nach seinem Abkühlen eine formschlüßige Verbindung einnimmt. Das induktive Verschweißen kann somit entfallen. Allerdings sind zur Herstellung der beiden Halbteile 1' und 2' zwei Gießformen erforderlich.

Die Fig. 6 zeigt eine praxisgerechte Ausführungsform der beiden Halbteile unter Berücksichtigung der bereits beschriebenen vorteilhaften Merkmale. Die Ausführungsform nach Fig. 6 entspricht weitgehend derjenigen nach Fig. 1 a. Zusätzlich sind bei der Ausführungsform nach Fig. 6 noch Vertiefungen 20 (die Vertiefung auf der Rückseite des Kurzschlußringes 6 ist in Fig. 6 verdeckt) vorhanden (siehe auch Fig. 4).

Normalerweise reicht die Preßverbindung der Halbteile bei den für die Erfindung in Frage kommenden Kleinmotoren aus, um eine normale Lebensdauer des Motors zu gewährleisten. Aus Gründen der Sicherheit ist allerdings folgender Arbeitsgang noch zusätzlich zu empfehlen, der nur geringe Mehrkosten verursacht: Nach dem Aufbringen des Käfigläufers auf der Welle wird der Käfigläufer kurzzeitig einem starken Magnetfeld ausgesetzt. Die im Läuferkäfig induzierte Spannung hat im Kupferkäfig (wenn also der Kurzschlußkäfig aus Kupfer ist) einen hohen Strom zur Folge, der am Kurzschlußstab-Kurzschlußring-Übergang zu einer örtlichen Verschweißung der beiden Teile führt. Auf diese Weise wird also eine Widerstandsschweißung durchgeführt. Diese induktive Verschweißung kann natürlich auch bereits vor dem Aufbringen auf die Welle erfolgen.

Es besteht ferner noch die Möglichkeit, daß beim Vorgang des Zusammenpressens der beiden Halbteile die über den Ring hinausstehenden Stabenden im gleichen Arbeitsgang durch ein entsprechendes Schlagwerkzeug eingekerbt werden. Dies bewirkt ein Aufweiten der überstehenden Stabenden gegenüber der Stabpartie im Kurzschlußring. Dadurch wird der Kurzschlußläufer zu einer kompakten Einheit geformt und ein Lösen der Stab-Ring-Verbindung verhindert.

Je nach Polzahl der Maschine bzw. des Motors und der Betriebsfrequenz des Versorgungsnetzes sowie der daraus resultierenden Umdrehungszahl des Läufers bei Betrieb der Maschine bzw. des Motors empfiehlt sich ein mehr oder weniger großes Überstehen der Kurzschlußstäbe über den Kurzschlußring hinaus. Es ist also vorteilhaft, daß die Kurzschlußstäbe über den Kurzschlußring hinaus überstehen. Die überstehenden Stabenden wirken dann als Lüfterflügel. Sie fördern die Wärmeabgabe vom Läufer zur umgebenden Luft bzw. bewirken eine vorteilhafte Zirkulation der Luft im Inneren der Maschine bzw. des Motors. Wie bereits erwähnt werden bzw. sind die überstehenden Enden der Kurzschlußstäbe vorzugsweise eingekerbt. Die überstehenden Stabenden eignen sich auch für eventuell erforderliche Maßnahmen im Zuge des Auswuchtens des Läufers, beispielsweise durch gezielten Materialabtrag. Dementsprechend ist eine weitere vorteilhafte Weiterbildung dadurch gekennzeichnet, daß das Material der überstehenden Enden abgetragen wird bzw. ist.

Vorwiegend aus Gründen der Verbesserung des Drehmomentenverlaufs (Verminderung parasitärer und synchroner Drehmomente) und aus Gründen der Geräuschreduzierung werden die Läufemuten und somit die Läuferstäbe üblicherweise etwas geschrägt gegenüber den Ständernuten ausgeführt, meist um etwa eine Ständemutteilung. Prizipiell ist dies auch mit erfindungsgemäß gegossenen Halbteilen des Läuferkäfigs möglich, wenngleich diese Gießform etwas aufwendiger zu gestalten ist. Die Verwendung zweier identischer Hälften bzw. Halbteile des Kurzschlußkäfigs ist auch in diesem Fall möglich. Beim Zusammenpressen der beiden Hälften ist dann allerdings darauf zu achten, daß durch ein gleichzeitiges Drehen von zumindest einer, möglicherweise aber auch beiden Hälften das Verbinden bzw. das Zusammenfügen der Hälften bzw. Halbteile sichergestellt ist.

Für Spezialantriebe mit Motoren für beispielsweise erhöhte Einschalthäufigkeit oder Umschalthäufigkeit und/oder auch mit einer erhöhten Momentencharakteristik empfiehlt sich die Ausführung der Halbteile aus Materialien mit gegenüber Aluminium reduziertem elektrischen Leitwert, z.B. Messing oder Bronze. Festigkeit, Temperaturbeständigkeit und Wärmekapazität weisen weit günstigere Werte gegenüber Aluminium auf.

Die Aussparungen in den Ringsegmenten weisen für die Aufnahme der Läuferstäbe deren Geometrie bzw. Form auf. Die vorzugsweise durch Druck verbundenen Halbteile können miteinander verschweißt werden, vorzugsweise durch die Wirkung von in den Käfig induzierten Strömen an den Berührungsflächen "Stabaussparung im Ring", vorzugsweise durch Induktionsschweißen.

## Patentansprüche

1. Kurzschlußkäfig für eine elektrische Maschine, vorzugsweise für eine Asynchronmaschine. wobei der Kurzschlußkäfig aus zwei Halbteilen (1, 2; 1', 2') besteht, die miteinander verbunden sind,
**dadurch gekennzeichnet,**
**daß** die Halbteile jeweils aus der halben Gesamt-Anzahl von Kurzschlußstäben (5, 7) und einem Kurzschlußring (4, 6) mit entsprechender Anzahl an Aussparungen (8, 9) für das Gegenstück bestehen.

2. Kurzschlußkäfig nach Anspruch 1, **dadurch gekennzeichnet, daß** die Aussparungen (8, 9; 9') in den Ringsegmenten (4, 6; 6') für die Aufnahme der Läuferstäbe (5, 7; 5') deren Form aufweisen.

3. Kurzschlußkäfig nach einem der vorhergehenden Ansprüche, **dadurch gekennzeichnet, daß** die Halbteile (1, 2; 1', 2') aus Metall, vorzugsweise Kupferguß, bestehen.

4. Kurzschlußkäfig nach einem der vorhergehenden Ansprüche, **dadurch gekennzeichnet, daß** die Halbteile (1, 2; 1', 2') durch Druck verbunden sind.

5. Kurzschlußkäfig nach einem der vorhergehenden Ansprüche, **dadurch gekennzeichnet, daß** die Halbteile (1, 2; 1', 2') miteinander verschweißt sind.

6. Kurzschlußkäfig nach einem der vorhergehenden Ansprüche, **dadurch gekennzeichnet, daß** die Kurzschlußringe (4, 6; 4') im Bereich der Kurzschlußstäbe (5, 7; 5') einen Radius (14, 16) aufweisen.

7. Kurzschlußkäfig nach einem der vorhergehenden Ansprüche, **dadurch gekennzeichnet, daß** an der Innenseite der Kurzschlußringe (4, 6; 6') Erhebungen (15, 17; 17') vorgesehen bzw. angegossen sind.

8. Kurzschlußkäfig nach einem der vorhergehenden Ansprüche, **dadurch gekennzeichnet, daß** die Kurzschlußstäbe (5, 7; 5') im Bereich ihrer Enden verjüngt (12, 13, 12') und/oder konisch bzw. leicht konisch sind.

9. Kurzschlußkäfig nach einem der vorhergehenden Ansprüche, **dadurch gekennzeichnet, daß** die Aussparungen (8, 9; 9') im Bereich der Innenseiten der Kurzschlußringe (4, 6; 6') konisch sind und/oder einen Radius und/oder eine Fase aufweisen.

10. Kurzschlußkäfig nach einem der vorhergehenden Ansprüche, **dadurch gekennzeichnet, daß** die Aussparungen (8, 9; 9') mit kleinen Rundungen (18) versehen sind.

11. Kurzschlußkäfig nach einem der vorhergehenden Ansprüche, **dadurch gekennzeichnet, daß** der Kurzschlußring (6') vor dem Fügen erhitzt wird.

12. Kurzschlußkäfig nach einem der vorhergehenden Ansprüche, **dadurch gekennzeichnet, daß** die Kurzschlußstäbe (5, 7; 5') über den Kurzschlußring hinaus überstehen.

13. Kurzschlußkäfig nach Anspruch 12, **dadurch gekennzeichnet, daß** die überstehenden Enden der Kurzschlußstäbe eingekerbt werden bzw. sind und/oder daß deren Material abgetragen wird bzw. ist.

14. Kurzschlußläufer, **gekennzeichnet durch** einen Kurzschlußkäfig nach einem der Ansprüche 1 bis 13.

15. Elektrische Maschine, insbesondere Asynchronmaschine, **gekennzeichnet durch** einen Kurzschlußkäfig nach einem der Ansprüche 1 bis 13 oder einen Kurzschlußläufer nach Anspruch 14.

## Claims

1. A short-circuit cage for an electrical machine, preferably an asynchronous machine, in which the short-circuit cage comprises two half parts (1, 2; 1', 2') which are connected with each other,
**characterized in**
**that** the half parts each consist of half the total number of short-circuit bars (5, 7) and a short-circuit ring (4, 6) with a corresponding number of recesses (8, 9) for the counterpart.

2. The short-circuit cage as claimed in claim 1, **characterized in that** the recesses (8, 9; 9') in the ring segments (4, 6; 6') for accommodating the rotor bars (5, 7; 5') have the shape thereof.

3. The short-circuit cage as claimed in any of the preceding claims, **characterized in that** the half parts (1, 2; 1', 2') are made of metal, preferably cast copper.

4. The short-circuit cage as claimed in any of the preceding claims, **characterized in that** the half parts (1, 2; 1', 2') are connected by pressure.

5. The short-circuit cage as claimed in any of the preceding claims, **characterized in that** the half parts (1, 2; 1', 2') are welded to each other.

6. The short-circuit cage as claimed in any of the preceding claims, **characterized in that** the short-circuit rings (4, 6; 4') in the vicinity of the short-circuit bars (5, 7; 5') have a radius (14, 16).

7. The short-circuit cage as claimed in any of the preceding claims, **characterized in that** on the inside of the short-circuit rings (4, 6; 6') raised portions (15, 17; 17') are provided or cast integrally.

8. The short-circuit cage as claimed in any of the preceding claims, **characterized in that** in the vicinity of their ends the short-circuit bars (5, 7; 5') are tapered (12, 13, 12') and/or conical or slightly conical.

9. The short-circuit cage as claimed in any of the preceding claims, **characterized in that** the recesses (8, 9; 9') in the vicinity of the insides of the short-circuit rings (4, 6; 6') are conical and/or have a radius and/or a chamfer.

10. The short-circuit cage as claimed in any of the preceding claims, **characterized in that** the recesses (8, 9; 9') are provided with small curvatures (18).

11. The short-circuit cage as claimed in any of the preceding claims, **characterized in that** the short-circuit ring (6') is heated prior to joining.

12. The short-circuit cage as claimed in any of the preceding claims, **characterized in that** the short-circuit bars (5, 7; 5') protrude beyond the short-circuit ring.

13. The short-circuit cage as claimed in claim 12, **characterized in that** the protruding ends of the short-circuit bars are notched and/or that the material thereof is removed.

14. A short-circuit rotor, **characterized by** a short-circuit cage as claimed in any of claims 1 to 13.

15. An electrical machine, in particular an asynchronous machine, **characterized by** a short-circuit cage as claimed in any of claims 1 to 13 or a short-circuit rotor as claimed in claim 14.

## Revendications

1. Cage de court-circuit pour une machine électrique, de préférence pour une machine asynchrone, la cage de court-circuit se composant de deux moitiés (1, 2 ; 1', 2'), qui sont réunies, **caractérisée en ce que** les moitiés se composent du demi nombre total de tiges de court-circuit (5, 7) et d'une bague de court-circuit (4, 6) avec un nombre correspondant d'évidements (8, 9) pour la pièce antagoniste.

2. Cage de court-circuit selon la revendication 1, **caractérisée en ce que** les évidements (8, 9 ; 9') dans les segments annulaires (4, 6 ; 6') présentent la forme de celles-ci pour la réception des tiges de rotor (5, 7 ; 5').

3. Cage de court-circuit selon l'une des revendications précédentes **caractérisée en ce que** les moitiés (1, 2 ; 1', 2') sont en métal, de préférence en fonte de cuivre.

4. Cage de court-circuit selon l'une des revendications précédentes, **caractérisée en ce que** les moitiés (1, 2 ; 1', 2') sont réunies par pression.

5. Cage de court-circuit selon l'une des revendications précédentes, **caractérisée en ce que** les moitiés (1, 2 ; 1', 2') sont soudées l'une à l'autre.

6. Cage de court-circuit selon l'une des revendications précédentes, **caractérisée en ce que** les bagues de court-circuit (4, 6 ; 4') présentent un arrondi (14, 16) à proximité des tiges de court-circuit (5, 7 ; 5').

7. Cage de court-circuit selon une des revendications précédentes, **caractérisée en ce que** sur le côté intérieur des bagues de court-circuit (4, 6 ; 6') sont prévues des surélévations (15, 17 ; 17').

8. Cage de court-circuit selon l'une des revendications précédentes, **caractérisée en ce que** les tiges de court-circuit (5, 7 ; 5') sont amincies à proximité de leurs extrémités (12, 13, 12') et/ou coniques ou légèrement coniques.

9. Cage de court-circuit selon l'une des revendications précédentes, **caractérisée en ce que** les évidements (8, 9 ; 9') sont coniques à proximité des côtés intérieurs des bagues de court-circuit (4, 6 ; 6') et/ou présentent un arrondi et/ou un chanfrein.

10. Cage de court-circuit selon l'une des revendications précédentes, **caractérisée en ce que** les évidements (8, 9 ; 9') sont munis de petites courbes (18).

11. Cage de court-circuit selon l'une des revendications précédentes, **caractérisée en ce que** la bague de court-circuit (6') est chauffée avant assemblage.

12. Cage de court-circuit selon une des revendications précédentes, **caractérisée en ce que** les tiges de court-circuit (5, 7 ; 5') font saillie au-delà de la bague de court-circuit.

13. Cage de court-circuit selon la revendication 12, **caractérisée en ce que** les extrémités débordantes des tiges de court-circuit sont encochées et/ou **en ce que** le matériau de celles-ci est enlevé.

14. Rotor en court-circuit, **caractérisé par** une cage de court-circuit selon l'une des revendications 1 à 13.

15. Machine électrique, en particulier machine asynchrone, **caractérisée par** une cage de court-circuit selon une des revendications 1 à 13 ou un rotor en court-circuit selon la revendication 14.
